(19) Europäisches Patentamt
European Patent Office
Office européen des brevets

(11) Veröffentlichungsnummer : **0 017 003**
**B1**

# (12) EUROPÄISCHE PATENTSCHRIFT

(45) Veröffentlichungstag der Patentschrift : **28.04.82**

(51) Int. Cl.³ : **C 09 B 57/04**

(21) Anmeldenummer : **80101166.9**

(22) Anmeldetag : **07.03.80**

## (54) Isoindolinfarbstoffe und deren Verwendung als Pigmente.

(30) Priorität : **12.03.79 DE 2909644**
**12.03.79 DE 2909567**

(43) Veröffentlichungstag der Anmeldung : **15.10.80 (Patentblatt 80/21)**

(45) Bekanntmachung des Hinweises auf die Patenterteilung : **28.04.82 Patentblatt 82/17**

(84) Benannte Vertragsstaaten : **CH DE FR GB IT**

(56) Entgegenhaltungen :
**DE - B - 1 012 406**
**DE - B - 1 025 080**
**FR - A - 1 537 299**
**FR - A - 2 107 064**
**FR - A - 2 307 008**
**GB - A - 858 601**

(73) Patentinhaber : **BASF Aktiengesellschaft**
**Carl-Bosch-Strasse 38**
**D-6700 Ludwigshafen (DE)**

(72) Erfinder : **Lotsch, Wolfgang, Dr.**
**Stettiner Strasse 32**
**D-6711 Beindersheim (DE)**

**EP 0 017 003 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Isoindolinfarbstoffe und deren Verwendung als Pigmente

Die Erfindung betrifft die Verwendung von Isoindolinfarbstoffen als Pigmente und neue Isoindolinfarbstoffe.

In der DE-A 10 25 080 werden Verbindungen beschrieben, von denen vermutet wird, daß diesen die Struktur der unten angegebenen Formel I zuzuschreiben ist. Die dort beschriebenen Verbindungen sollen in organischen Lösungsmitteln löslich sein. Sie färben nach Überführung in eine wasserlösliche Form Baumwolle und Viskosekunstseide in blauen Tönen an.

Es wurde nun gefunden, daß die Farbstoffe der Formel I

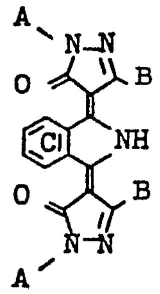

(I)

in der

A Wasserstoff oder Phenyl und

B Wasserstoff, $C_1$- bis $C_4$-Alkyl, Phenyl oder Carbo-$C_1$- bis $C_4$-alkoxy, Carbamoyl, N-$C_1$- bis $C_4$-Alkylcarbamoyl oder N-Phenylcarbamoyl bedeuten und worin die Phenylreste und/oder der Ring C gegebenenfalls durch nicht löslichmachende Gruppen substituiert sind und die Gruppen A und B gleich oder verschieden sein können, hervorragend als Pigmente geeignet sind.

Die Verbindungen der Formel I geben in Kunststoffen, Lacken und Druckfarben Färbungen mit hoher Farbstärke, sehr guter Licht- und Wetterechtheit sowie sehr guter Überlackierechtheit. Man erhält schwarze Färbungen, die ein sehr hohes Remissionsvermögen im IR aufweisen.

Unter nicht löslichmachende Substituenten werden in der vorliegenden Erfindung solche verstanden, die weder in Wasser noch in organischen Lösungsmitteln Löslichkeit des Farbstoffs bewirken. Solche Substituenten sind beispielsweise Halogen, Alkyl oder Alkyloxy mit je 1 bis 6 C-Atomen, Nitro, Trifluormethyl, Carbamoyl, Ureido, Sulfamoyl oder Cyan ; Alkoxycarbonyl, Alkanoyl, N-Alkylcarbamoyl, N-Alkylureido oder Alkanoylamino mit insgesamt je 2 bis 6 C-Atomen ; Alkylsulfonyl oder Alkylsulfamoyl mit je 1 bis 6 C-Atomen ; Aryloxycarbonyl, Aroyl, Aroylamino, Arylsulfonyl, N-Arylcarbamoyl, N-Arylsulfamoyl, Aryl, N-Arylureido oder Arylazo oder ein ankondensierter 5 oder 6 gliedriger Heteroring, der im Ring eine $-\underset{\underset{O}{\|}}{C}-NH-$Gruppierung enthält.

Als nicht löslichmachende Substituenten sind Chlor, Brom, Carbamoyl, Sulfamoyl, $C_2$- bis $C_4$-Alkanoylamino oder Benzoylamino bevorzugt.

Von den Farbstoffen der Formel I sind die der Formeln IIa und IIb bevorzugt :

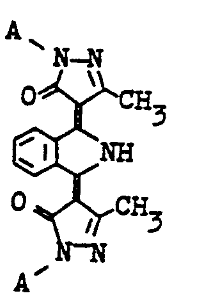

(IIa)

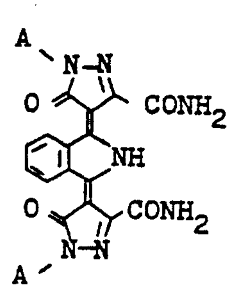

(IIb)

worin A die oben angegebene Bedeutung hat.

Die Isoindolinfarbstoffe der Formel (Ia)

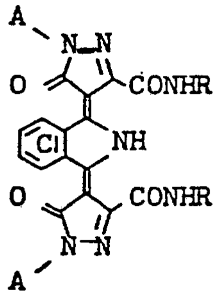

(Ia)

in der

A Wasserstoff oder Phenyl und

R Wasserstoff, $C_1$- bis $C_4$-Alkyl oder Phenyl bedeuten und worin die Phenylreste und/oder der Ring C gegebenenfalls durch nicht löslichmachende Gruppen substituiert sind und die beiden A und R gleich oder verschieden sein können, sind neu.

Unter nicht löslichmachende Gruppen (Substituenten) werden die vorstehend genannten verstanden. Als nicht löslichmachende Substituenten sind Chlor, Brom, Carbamoyl, Sulfamoyl, $C_2$- bis $C_4$-Alkanoylamino oder Benzoylamino bevorzugt.

Von den Verbindungen der Formel Ia sind die der Formel Ib bevorzugt :

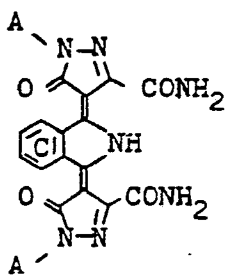

(Ib)

in der A und C die oben angegebene Bedeutung haben.

Besonders bevorzugt sind die Verbindungen der Formel Ib, in der der Ring C nicht weiter substituiert ist.

Ganz besonders bevorzugt sind Verbindungen der Formel Ib, in der der Ring C nicht weiter substituiert ist und A für Phenyl, 3-Chlorphenyl oder 4-Chlorphenyl steht.

Die Herstellung der Verbindungen der Formel I ist aus der deutschen Patentschrift 1 025 080 bekannt. Danach erhält man (I) durch Umsetzen der entsprechenden Pyrazolonderivate mit Phthalodinitril im Molverhältnis 2: 1. Nach dem Verfahren der PS erhält man die Farbstoffe I nur in mäßigen Ausbeuten und in unreiner Form. Die Verfahrensprodukte sind daher nicht für die Verwendung als Pigmente geeignet.

Reine, für Pigmentzwecke geeignete Farbstoffe der Formel I erhält man durch Kondensieren von einem Mol eines Diiminoisoindolins der Formel III

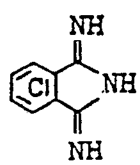

(III)

mit 2 Mol Pyrazolon der Formel IV

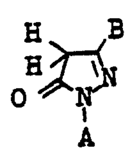

(IV)

worin A, B und C die oben angegebene Bedeutung haben.

Für den Fall, daß in der Formel I die beiden A und/oder B verschieden sein sollen, können Gemische aus Pyrazolonen der Formel IV mit den Diiminoisoindolinen III kondensiert werden. Man kann aber auch entsprechend dem Beispiel 80 der DE-A 16 70 748 1 Mol des Pyrazolons IV zuerst halbseitig mit 1 Mol des

Diiminoisoindolins III kondensieren (= Halbkondensationsprodukt) und in einer zweiten Stufe das Halbkondensationsprodukt mit dem Pyrazolon der Formel IV zum unsymmetrischen Farbstoff der Formel I weiter umsetzen. Bei der Umsetzung in einer Stufe, bzw. bei der stufenweisen Umsetzung in der zweiten Stufe, kann ein geringer, z.B. bis zu 20 %iger Überschuß an Pyrazolon von Vorteil sein.

Die Kondensation der Diiminoisoindoline der Formel III mit den Pyrazolonen der Formel IV kann in Wasser, vorteilhafterweise in einem organischen Lösungs- oder Verdünnungsmittel erfolgen. Besonders gut verläuft die Kondensation in aliphatischen Mono- oder Dicarbonsäuren wie Ameisensäure, Essigsäure, Propionsäure oder Mischungen davon, weshalb diese Lösungsmittel bevorzugt verwendet werden. Die Menge des verwendeten Lösungsmittels ist unkritisch. Die Mindestmenge wird durch die Rührbarkeit des Reaktionsgemisches bestimmt. Im allgemeinen wendet man die 10- bis 20-fache Gewichtsmenge an Lösungsmittel, bezogen auf das angewandte Pyrazolon, an.

Die Umsetzung erfolgt in der Regel bei Temperaturen zwischen 50 °C und 150 °C, vorzugsweise zwischen 70 °C und 120 °C.

Die Verfahrensprodukte werden durch Filtrieren aus dem Reaktionsgemisch isoliert und können im allgemeinen als solche direkt als Pigment verwendet werden. Man kann die Verfahrensprodukte aber auch nach an sich bekannten Formierungsverfahren in für den vorgesehenen Verwendungszweck optimale Pigmentformen überführen.

Die folgenden Beispiele sollen die Erfindung weiter erläutern. Die Teile und Prozentangaben beziehen sich auf das Gewicht.

Beispiel 1

42 Teile 1-(4-Chlorphenyl)-3-methyl-5-pyrazolon und 20 Teile des Monoadduktes von Äthylenglycol an Diiminoisoindolin werden in 500 Teilen Eisessig 2 Stunden bei Raumtemperatur und 3 Stunden bei 90 °C gerührt. Nach dem Abkühlen wird filtriert, mit Eisessig und Methanol gewaschen. Man erhält 49 Teile des Pigments der Formel

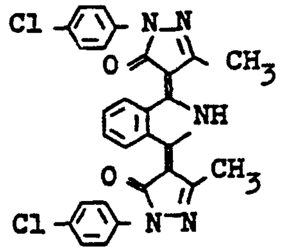

Lackeinfärbungen mit diesem Pigment zeigen einen kräftigen schwarzen Farbton mit sehr guter Licht- und Überlackierechtheit und einer hohen Remission im IR.

Beispiele 2 bis 11

Man erhält Schwarzpigmente mit vergleichbar guten Eigenschaften, wenn man die aufgeführten Pyrazolone der Formel IV mit Diiminoisoindolin entsprechend den Angaben in Beispiel 1 kondensiert.

Die Substituenten A und B der erhaltenen Verfahrensprodukte (Formel I) sind in der Tabelle angegeben.

| Bsp. | Pyrazolon der Formel IV | Farbstoff der Formel I mit |
|---|---|---|
| 2 | 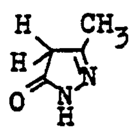 | A = H<br>B = $-CH_3$ |
| 3 | 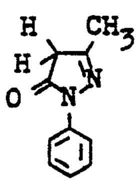 | A = 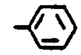<br>B = $-CH_3$ |

(Fortsetzung)

| Bsp. | Pyrazolon der Formel IV | Farbstoff der Formel I mit |
|---|---|---|
| 4 | 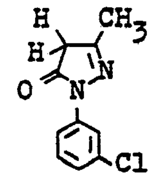 | A = 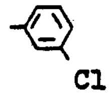<br>B = $-CH_3$ |
| 5 | 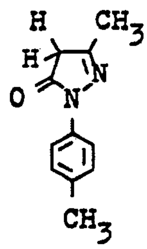 | A = 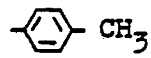<br>B = $-CH_3$ |
| 6 | 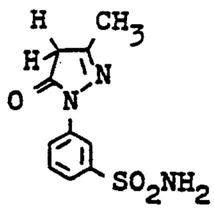 | A = 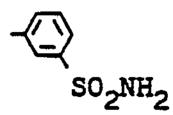<br>B = $-CH_3$ |
| 7 | 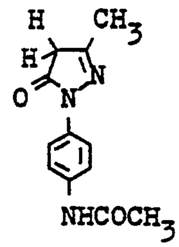 | A = 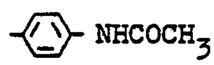<br>B = $-CH_3$ |
| 8 | 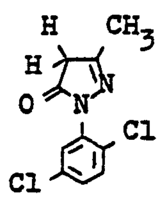 | A = 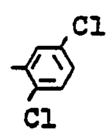<br>B = $-CH_3$ |
| 9 | 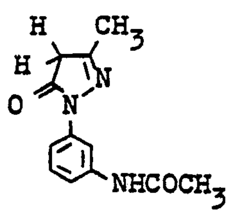 | A = 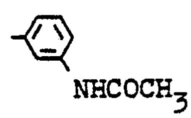<br>B = $-CH_3$ |
| 10 | 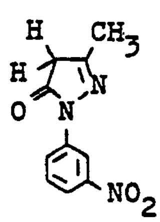 | A = 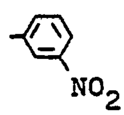<br>B = $-CH_3$ |
| 11 | 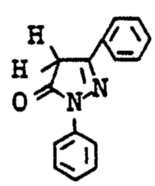 | A = 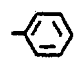<br>B = 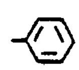 |

Beispiel 12

(Anwendung)

a) Lack

10 Teile des nach Beispiel 1 erhaltenen Farbstoffes und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden schwarze Volltonlackierungen mit guter Licht- und Überspritzechtheit erhalten. Durch Zumischen von Titandioxyd werden graue bis schwarze Färbungen erhalten.

Verwendet man die in den Beispielen 2 bis 11 beschriebenen Farbstoffe, so werden Lackierungen in ähnlichen schwarzen Farbtönen und ähnlichen Eigenschaften erhalten.

b) Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195 °C). Man erhält schwarze Extrudate, deren Färbung gute Lichtechtheit aufweist.

Verwendet man Mischungen aus 0,5 Teilen Farbstoff und 1 Teil Titandioxyd, so erhält man deckende, grauschwarze Färbungen.

Verwendet man die Pigmentfarbstoffe, die nach den Beispielen 2 bis 11 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine schwarze Toluol-Tiefdruckfarbe. Die mit dieser Farbe erhaltenen Drucke weisen gute Lichtechtheit auf.

Bei Verwendung der Farbstoffe aus den Beispielen 2 bis 11 werden ähnliche Ergebnisse erhalten.

Beispiel 13

42 Teile 1-Phenyl-5-pyrazolon-3-carbonamid und 20 Teile des Monoaddukts von Äthylenglycol an Diiminoisoindolin werden in 650 Teilen Eisessig 2 Stunden bei Raumtemperatur und 3 Stunden bei 100 °C gerührt. Nach dem Abkühlen wird filtriert, mit Eisessig und Methanol gewaschen. Man erhält 50 Teile des Pigmentes der Formel

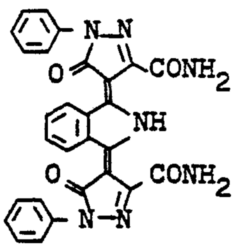

Das Pigment liefert im Lack Färbungen mit einem kräftigen schwarzen Farbton. Die Färbungen zeichnen sich durch gute Migrations-, Licht- und Wetterechtheiten aus. Besonders hervorzuheben ist die hohe Remission der Färbungen im IR.

Beispiele 14 bis 18

Schwarzpigmente mit vergleichbar guten Eigenschaften werden erhalten, wenn man nach Beispiel 13 arbeitet und das 1-Phenyl-5-pyrazolon-3-carbonamid durch die folgenden Pyrazolone ersetzt:

| Beisp. | Pyrazolone der Formel IV | Farbstoff der Formel I mit |
|---|---|---|
| 14 | 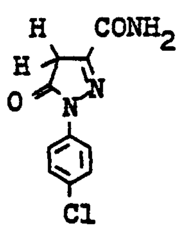 | A = 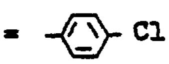<br>R = H |

(Fortsetzung)

| Beisp. | Pyrazolone der Formel IV | Farbstoff der Formel I mit |
|---|---|---|
| 15 | 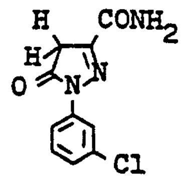 | A = 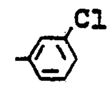<br>R = H |
| 16 | 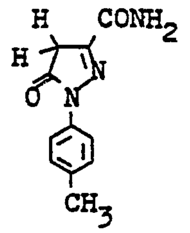 | A = 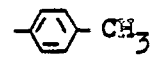<br>R = H |
| 17 | 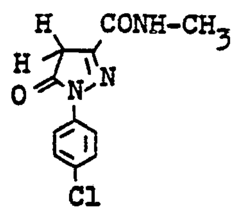 | A = 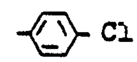<br>R = $-CH_3$ |
| 18 | 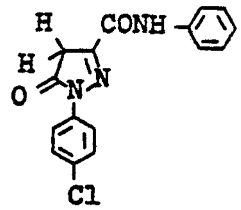 | A = 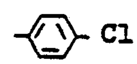<br>R = 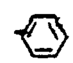 |

Beispiel 19

(Anwendung)

a) Lack

10 Teile des nach Beispiel 1 erhaltenen Farbstoffes und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden schwarze Volltonlackierungen mit guter Licht- und Überspritzechtheit erhalten. Durch Zumischen von Titandioxyd werden graue bis schwarze Färbungen erhalten.

Verwendet man die in den Beispielen 2 bis 6 beschriebenen Farbstoffe, so werden Lackierungen in ähnlichen schwarzen Farbtönen und ähnlichen Eigenschaften erhalten.

b) Kunststoff

0,5 Teile des nach Beispiel 1 erhaltenen Farbstoffs werden auf 100 Teile Polystyrolgranulat (Standard-Marke) aufgetrommelt. Das angefärbte Granulat wird durch Extrudieren homogenisiert (190 bis 195 °C). Man erhält schwarze Extrudate, deren Färbung gute Lichtechtheit aufweist.

Verwendet man Mischungen aus 0,5 Teilen Farbstoff und 1 Teil Titandioxyd, so erhält man deckende, grauschwarze Färbungen.

Verwendet man die Pigmentfarbstoffe, die nach den Beispielen 2 bis 6 erhalten werden, so erhält man analoge Färbungen.

c) Druckfarbe

8 Teile des nach Beispiel 1 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine schwarze Toluol-Tiefdruckfarbe. Die mit dieser Farbe erhaltenen Drucke weisen gute Lichtechtheit auf.

Bei Verwendung der Farbstoffe aus den Beispielen 2 bis 6 werden ähnliche Ergebnisse erhalten.

Beispiel 20

42 Teile 1-(4-Chlorphenyl)-3-methyl-5-pyrazolon und 20 Teile des Monoadduktes von Äthylenglycol

an Diiminoisoindolin werden in 500 Teilen Eisessig 2 Stunden bei Raumtemperatur und 3,5 Stunden bei 70 °C gerührt. Nach dem Abkühlen wird filtriert, mit Eisessig und Methanol gewaschen. Man erhält 49 Teile des Pigments der Formel

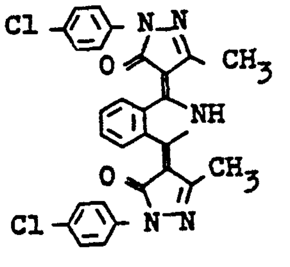

Lackeinfärbungen mit diesem Pigment zeigen einen kräftigen grünstichig schwarzen Farbton mit sehr guten Licht- und Überlackierechtheit und einer hohen Remission im IR.

Beispiel 21

42 Teile 1-(4-Chlorphenyl)-3-methyl-5-pyrazolon und 20 Teile des Monoadduktes von Äthylenglycol an Diiminoisoindolin werden in 400 Teilen Isobutanol und 20 Teilen Eisessig 1 Stunde bei Raumtemperatur und 3 Stunden bei 80 °C gerührt. Nach dem Abkühlen wird filtriert, mit Eisessig und Methanol gewaschen. Man erhält 49 Teile des Pigments der Formel

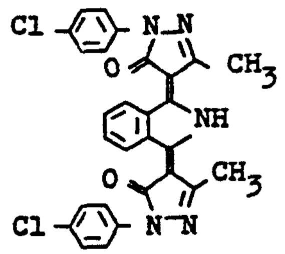

Lackeinfärbungen mit diesem Pigment zeigen einen kräftigen grünstichig schwarzen Farbton mit sehr guter Licht- und Überlackierechtheit und einer hohen Remission im IR.

**Ansprüche**

1. Verwendung von Isoindolinfarbstoffen der allgemeinen Formel

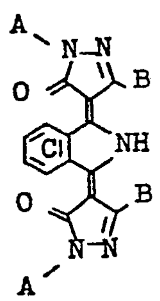

in der

A Wasserstoff oder Phenyl und

B Wasserstoff, $C_1$- bis $C_4$-Alkyl, Phenyl, Carbo-$C_1$- bis $C_4$-alkoxy, Carbamoyl, N-$C_1$- bis $C_4$-Alkylcarbamoyl oder N-Phenylcarbamoyl bedeuten, wobei die Phenylreste und/oder der Ring C gegebenenfalls durch nicht löslichmachende Gruppen substituiert sind und die Gruppen A und B gleich oder verschieden sein können, als Pigmente.

2. Verwendung von Isoindolinderivaten gemäß Anspruch 1, dadurch gekennzeichnet, daß der Phenylrest C und/oder die Phenylreste in A und B gegebenenfalls durch Chlor, Brom, Carbamoyl, Sulfamoyl, $C_2$- bis $C_4$-Alkanoylamino oder Benzoylamino substituiert sind.

3. Verwendung von Isoindolinderivaten gemäß Anspruch 1, dadurch gekennzeichnet, daß der Ring C nicht weiter substituiert ist und die Phenylreste in A und/oder B gegebenenfalls durch Chlor, Brom,

Carbamoyl, Sulfamoyl oder $C_2$- bis $C_4$-Alkanoylamino substituiert sind.

4. Verwendung von Isoindolinderivaten gemäß Anspruch 1, 2 oder 3, dadurch gekennzeichnet, daß in der Formel B für Methyl oder Carbamoyl steht.

5. Verwendung von Isoindolinderivaten gemäß Anspruch 1, 2 oder 3, dadurch gekennzeichnet, daß in der Formel, A für 3-Chlorphenyl, 4-Chlorphenyl, Phenyl oder Wasserstoff und B für Methyl oder Carbamoyl stehen.

6. Isoindolinfarbstoffe der allgemeinen Formel

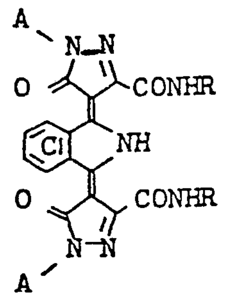

in der

A Wasserstoff oder Phenyl und

R Wasserstoff, $C_1$- bis $C_4$-Alkyl oder Phenyl bedeuten und wobei die Phenylreste und/oder der Ring C gegebenenfalls durch nicht löslichmachende Gruppen substituiert sind und die beiden A gleich oder verschieden sein können.

7. Isoindolinfarbstoffe gemäß Anspruch 6, dadurch gekennzeichnet, daß der Ring C und/oder die Phenylreste in A und/oder R gegebenenfalls durch Chlor, Brom, Carbamoyl, Sulfamoyl, $C_2$- bis $C_4$-Alkanoylamino oder Benzoylamino substituiert sind.

8. Isoindolinfarbstoffe gemäß Anspruch 6 oder 7, gekennzeichnet durch die Formel

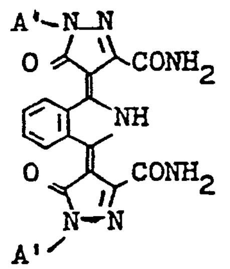

in der A′ für Phenyl, 3-Chlorphenyl oder 4-Chlorphenyl steht.

**Claims**

1. Use of isoindoline dyes of the general formula

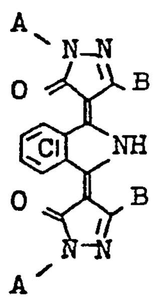

where

A is hydrogen or phenyl and

B is hydrogen, $C_1$-$C_4$-alkyl, phenyl, carbo-$C_1$-$C_4$-alkoxy, carbamyl, N-$C_1$-$C_4$-alkylcarbamyl or N-phenylcarbamyl, the phenyl radicals and/or the ring C being unsubstituted or substituted by groups which do not confer solubility, and the groups A and B may be identical or different, as pigments.

2. Use of isoindoline derivatives as claimed in claim 1, characterized in that the phenyl radical C and/or the phenyl radicals in A and B are unsubstituted or are substituted by chlorine, bromine, carbamyl, sulfamyl, $C_2$-$C_4$-alkanoylamino or benzoylamino.

3. Use of isoindoline derivatives as claimed in claim 1, characterized in that the ring C does not carry further substituents and the phenyl radicals in A and/or B are unsubstituted or are substituted by bromine, carbamyl, sulfamyl or $C_2$-$C_4$-alkanoylamino.

4. Use of isoindoline derivatives as claimed in claim 1, 2 or 3, characterized in that in the formula B is methyl or carbamyl.

5. Use of isoindoline derivatives as claimed in claim 1, 2 or 3, characterized in that in the formula A is 3-chlorophenyl, 4-chlorophenyl, phenyl or hydrogen, and B is methyl or carbamyl.

6. Isoindoline dyes of the general formula

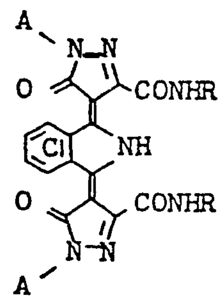

where
A is hydrogen or phenyl and
R is hydrogen, $C_1$-$C_4$-alkyl or phenyl, the phenyl radicals and/or the ring C being unsubstituted or substituted by groups which do not confer solubility, and it being possible for the two A's to be indentical or different.

7. Isoindoline dyes as claimed in claim 6, characterized in that the ring C and/or the phenyl radicals in A and/or R are unsubstituted or are substituted by chlorine, bromine, carbamyl, sulfamyl, $C_2$-$C_4$-alkanoylamino or benzoylamino.

8. Isoindoline dyes as claimed in claim 6 or 7, characterized by the formula

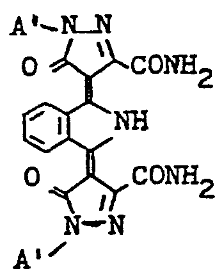

where A' is phenyl, 3-chlorophenyl or 4-chlorophenyl.

**Revendications**

1. Utilisation de colorants d'isoindolines de formule générale

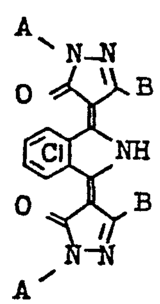

, dans laquelle
A représente l'hydrogène ou un groupe phényle et
B représente l'hydrogène, un groupe alkyle en C 1-C 4, phényle, carbo-(alcoxy en C 1-C 4),

carbamoyle, N-(alkyle en C 1-C 4)-carbamoyle ou N-phénylcarbamoyle, les noyaux phényle et/ou le noyau C pouvant éventuellement être substitués par des groupes non solubilisants et les groupes A et B pouvant être identiques ou différents, en tant que pigments.

2. Utilisation de dérivés d'isoindolines selon la revendication 1, caractérisée en ce que le radical phényle C et/ou les radicaux phényle contenus dans A et B sont éventuellement substitués par le chlore, le brome, les groupes carbamoyle, sulfamoyle, alcanoylamino en C 2-C 4 ou benzoylamino.

3. Utilisation de dérivés d'isoindolines selon la revendication 1, caractérisée en ce que le noyau C ne porte pas d'autres substituants et en ce que les radicaux phényle contenus dans A et/ou B sont éventuellement substitués par le chlore, le brome, des groupes carbamoyle, sulfamoyle, ou alcanoylamino en C 2-C 4.

4. Utilisation de dérivés d'isoindolines selon la revendication 1, 2 ou 3, caractérisée en ce que le symbole B de la formule représente un groupe méthyle ou carbamoyle.

5. Utilisation de dérivés d'isoindolines selon la revendication 1, 2 ou 3, caractérisée en ce que, dans la formule, A représente un groupe 3-chlorophényle, 4-chlorophényle, phényle ou l'hydrogène et B représente un groupe méthyle ou carbamoyle.

6. Colorants d'isoindolines de formule générale

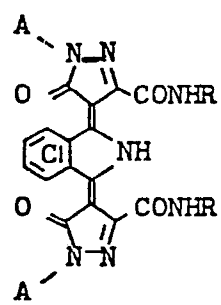

dans laquelle

A représente l'hydrogène ou un groupe phényle et

R représente l'hydrogène, un groupe alkyle en C 1-C 4 ou phényle, les noyaux phényle et/ou le noyau C pouvant être éventuellement substitués par des groupes non solubilisants et les deux symboles A pouvant avoir des significations identiques ou différentes.

7. Colorants d'isoindolines selon la revendication 6, caractérisés en ce que le noyau C et/ou les radicaux phényle contenus dans A et/ou R sont éventuellement substitués par le chlore, le brome, des groupes carbamoyle, sulfamoyle, alcanoylamino en C 2-C 4 ou benzoylamino.

8. Colorants d'isoindolines selon la revendication 6 ou 7, caractérisés par la formule

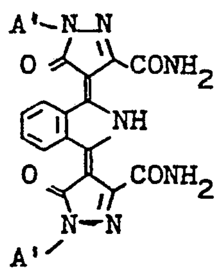

dans laquelle A' représente un groupe phényle, 3-chlorophényle ou 4-chlorophényle.